# FASCICULE DE BREVET EUROPEEN

(11) **EP 2 261 620 B1**
(45) Date de publication et mention de la délivrance du brevet: **20.07.2011**
(21) Numéro de dépôt: 10354028.2
(22) Date de dépôt: 04.06.2010
(51) Int. Cl.: G01J 5/04

(54) **Dispositif de détection et/ou d'émission de rayonnement électromagnétique et procédé de fabrication d'un tel dispositif**
Vorrichtung zur Erkennung und/oder Ausstrahlung von elektromagnetischen Strahlen, und Herstellungsverfahren einer solchen Vorrichtung
Device for detecting and/or emitting electromagnetic radiation and method for manufacturing such a device

(30) Priorité: 12.06.2009 FR 0902875
(43) Date de publication de la demande: 15.12.2010
(73) Titulaire: Commissariat à l'Énergie Atomique et aux Énergies Alternatives, 75015 Paris (FR)
(72) Inventeur: Ouvrier-Buffet, Jean-Louis, 74320 Sevrier (FR)
(74) Mandataire: Dubreu, Sandrine

(56) Documents cités:
- EP-A- 1 243 903
- FR-A- 2 816 447

## Description

### Domaine technique de l'invention

L'invention concerne un dispositif de détection et/ou d'émission de rayonnement électromagnétique ayant un microboîtier d'encapsulation sous vide ou sous pression réduite qui comporte un capot et un substrat délimitant un logement hermétique. Il comporte un détecteur et/ou émetteur thermique non refroidi ayant une membrane sensible au rayonnement électromagnétique suspendue au-dessus du substrat. Le logement encapsule au moins le détecteur et/ou émetteur thermique non refroidi, des moyens de réflexion du rayonnement électromagnétique vers la membrane et au moins un getter. Les moyens de réflexion se présentent sous forme d'une couche mince disposée entre une face avant du substrat et la membrane, et a une première face principale en regard de la membrane ainsi qu'une seconde face principale en regard de la face avant du substrat.

L'invention concerne également un procédé de fabrication d'un tel dispositif.

### État de la technique

Les dispositifs de détection et/ou d'émission de rayonnement électromagnétique intègrent un ou plusieurs détecteurs et/ou émetteurs thermiques et utilisent un changement d'origine thermique des propriétés électriques des matériaux constituant le détecteur et/ou l'émetteur telles que la résistance ou la constante diélectrique. Les détecteurs et/ou émetteurs thermiques sont dits "non refroidis" lorsqu'ils fonctionnent sans avoir recours à un refroidissement. Parmi ces détecteurs thermiques non refroidis, on trouve, par exemple, les détecteurs thermiques infrarouge (IR) sensibles aux rayonnements infrarouges (IR) dans la bande III (8 à 12µm).

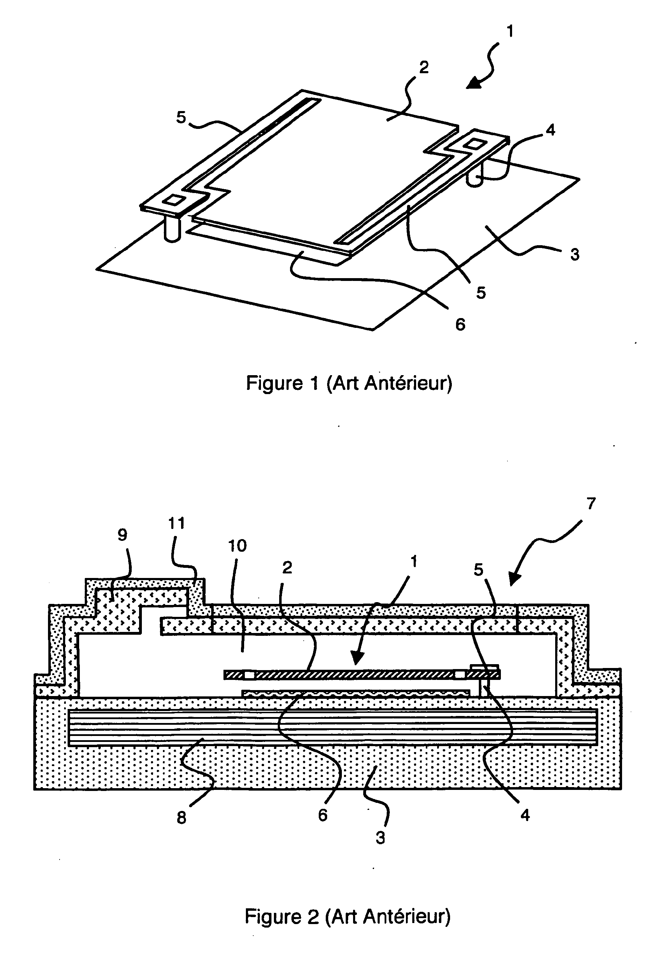

Comme représenté à la figure 1, les détecteurs et/ou émetteurs thermiques 1 non refroidis, tels que les détecteurs thermiques IR, comportent généralement une membrane 2 comportant l'élément sensible au rayonnement électromagnétique, isolée thermiquement d'un substrat 3 par la réalisation de structures isolantes constituées de microponts 4 et de bras d'isolement thermique 5. Cette structure isolante suspendue tend à réduire l'inertie thermique, pour diminuer le temps de réponse des signaux émis par le détecteur et/ou émetteur 1 et améliorer le rapport signal/bruit. Il est également bien connu de disposer sur le substrat 3, un réflecteur 6 sous forme d'une couche mince face à la membrane 2 afin de réfléchir le rayonnement incident vers la membrane 2 et optimiser le rendement du détecteur et/ou émetteur 1.

Le dispositif de détection et/ou d'émission de rayonnement électromagnétique représenté à la figure 2, est constitué classiquement d'un ou de plusieurs détecteurs et/ou émetteurs thermiques 1 non refroidis placés dans un microboîtier 7 et connectés à un circuit de lecture 8 disposé dans le substrat 3, classiquement, réalisé en silicium. Le microboîtier 7 est formé d'un capot 9 et du substrat 3 qui délimitent un logement 10. Le microboîtier 7 est mis sous vide ou sous pression réduite afin de limiter les pertes thermiques et gagner en performance. Une couche de scellement 11 recouvre le capot 9 afin de rendre le microboîtier 7 hermétique. Le capot 9 et la couche de scellement 11 sont, de préférence, constitués par un matériau transparent aux rayonnements émis ou absorbés par les détecteurs et/ou émetteurs 1 ainsi encapsulés. Ils peuvent également être munis d'une fenêtre transparente aux rayonnements.

Les performances du dispositif de détection et/ou d'émission de rayonnement électromagnétique dépend de l'intégration du détecteur et/ou émetteur dans le dispositif et de la qualité de l'isolation thermique.

De nombreux travaux ont été réalisés pour améliorer l'encapsulation des détecteurs et/ou émetteurs et notamment la qualité du vide dans les dispositifs de détection et/ou d'émission. Certains travaux proposent l'utilisation, au sein du dispositif de moyens de pompage de gaz résiduels couramment appelés "getter". La fonction du getter est d'absorber ou de capturer les gaz résiduels qui se dégagent du dispositif au cours de son utilisation après scellement du microboîtier. Les espèces gazeuses qui sont susceptibles de se dégager des parois internes du dispositif contiennent, typiquement, de l'oxygène, de l'hydrogène, de l'azote, du monoxyde ou dioxyde de carbone, du méthane ou d'autres espèces organiques. Ces gaz résiduels risquent de provoquer une augmentation de la pression interne dans le microboîtier et d'affecter, en conséquence, la qualité de l'isolation thermique des détecteurs et/ou émetteurs thermiques.

Le getter est constitué d'un ou de plusieurs matériaux getter qui, une fois activés, sont réactifs à certains des gaz résiduels. Les matériaux getter possèdent des propriétés physiques favorisant l'absorption, la diffusion et la migration des gaz résiduels au sein du getter. Ainsi, placé dans le microboîtier du dispositif de détection et/ou d'émission de rayonnement électromagnétique, le getter maintient le vide et pompe les gaz résiduels.

À titre d'exemple, les documents JP-A-11326037, US-A-5895233, JP-A-2000337959 et US-A-5921461 décrivent des dispositifs de détection IR encapsulés contenant un getter placé sur des zones situées sur les faces internes du logement hermétique. Ces zones sont inoccupées par les détecteurs et inactives optiquement. Le document US-A-5895233 divulgue notamment des getters disposés dans une zone du substrat voisine des détecteurs, sur les parois des microponts ou sur la face du capot, inoccupée par la fenêtre.

Par ailleurs, les espèces chimiques utilisées lors des différentes opérations de fabrication de tels dispositifs polluent les getters. Avant le scellement du dispositif, le getter doit être activé thermiquement, sans toutefois appliquer des températures trop élevées, afin de ne pas risquer de détériorer les éléments constitutifs du détecteur et/ou émetteur. Cette solution est souvent insuffisante pour obtenir des propriétés optimales du getter.

Pour optimiser le getter, les documents JP-A-2000337959 et US-A-5921461 proposent de confiner le getter dans des compartiments ou d'augmenter le volume ou la surface du getter. Ces solutions sont néanmoins insuffisantes car elles sont mises en oeuvre au détriment du nombre de détecteurs et/ou d'émetteurs. L'espace réservé aux éléments optiquement actifs dans le microboîtier est alors fortement entamé, limitant ainsi les possibilités de miniaturisation.

Le document US7279682 propose d'implanter le getter dans une cavité placée à l'extérieur du logement hermétique et réalisée sur une face arrière inactive du substrat. La face arrière utilisée est à l'opposé de la face avant active qui contient le circuit de lecture. Cette cavité est en communication avec le logement hermétique par un passage étanche traversant l'épaisseur du substrat. Or, le substrat à traverser étant relativement épais, le passage étanche occupe un espace important, de l'ordre de 10 µm, au détriment de l'espace occupé par le détecteur. Cette disposition constitue un frein important à l'encapsulation individuelle des détecteurs, en particulier à faible pas (17 à 25 µm) ainsi qu'à la miniaturisation des dispositifs de détection thermique.

D'autre part, le document US6753526 décrit un dispositif de détection de rayonnement IR intégrant un getter disposé sur la quasi-totalité de la surface du substrat, notamment sous la membrane du détecteur thermique IR. Les auteurs suggèrent d'utiliser un getter métallique présentant un coefficient de réflexion élevé, afin de pouvoir l'utiliser simultanément comme getter et réflecteur, jouant à la fois les deux fonctions, absorbante et réfléchissante.

### Objet de l'invention

L'invention a pour but de remédier aux inconvénients de l'art antérieur et notamment d'améliorer la durée de vie des détecteurs sans perturber la qualité optique du dispositif.

L'invention a également pour but un dispositif répondant aux exigences de miniaturisation des microcomposants tout en maintenant des caractéristiques optimales du dispositif de détection et/ou d'émission.

L'invention a également pour but un procédé de fabrication d'un dispositif de détection et/ou d'émission de rayonnement électromagnétique simple à mettre en oeuvre, peu coûteux et compatible avec les techniques classiques de la microélectronique.

Selon l'invention, ce but est atteint par un dispositif de détection et/ou d'émission de rayonnement électromagnétique et son procédé de fabrication selon les revendications indexées. En particulier, ce but est atteint par le fait que le getter est disposé sur au moins une partie de la seconde face principale des moyens de réflexion pour former un ensemble réflecteur/getter et par le fait qu'un espace libre, libérant une surface du getter et en communication avec le logement hermétique, est formé entre l'ensemble réflecteur/getter et la face avant du substrat.

### Description sommaire des dessins

D'autres avantages et caractéristiques ressortiront plus clairement de la description qui va suivre des modes particuliers de réalisation de l'invention donnés à titre d'exemples non limitatifs et représentés aux dessins annexés, dans lesquels :
- La figure 1 représente, schématiquement et en coupe, un détecteur thermique non refroidi selon l'art antérieur.
- La figure 2 représente, schématiquement et en coupe, un dispositif de détection et/ou d'émission de rayonnement électromagnétique selon l'art antérieur.
- La figure 3 correspond à une représentation graphique de l'évolution du rapport de la puissance absorbée sur la puissance incidente A du rayonnement de différents réflecteurs en fonction de la longueur d'onde λ du rayonnement.
- La figure 4 représente, schématiquement et en coupe, un premier mode de réalisation particulier d'un dispositif de détection et/ou d'émission de rayonnement électromagnétique selon l'invention.
- La figure 5 représente, schématiquement et en coupe, un agrandissement du dispositif selon la figure 4.
- La figure 6 représente, schématiquement et en coupe, un agrandissement d'une variante du dispositif selon la figure 4.
- La figure 7 représente, schématiquement et en coupe, une vue selon l'axe AA du dispositif représenté à la figure 4.
- Les figures 8 à 12 représentent, schématiquement et en coupe, différentes étapes d'un procédé de fabrication de l'invention selon la figure 6.
- La figure 13 représente, schématiquement et en coupe, un second mode de réalisation particulier d'un dispositif de détection et/ou d'émission de rayonnement électromagnétique selon l'invention.
- Les figures 14 à 16 représentent, schématiquement et en coupe, différentes étapes d'un procédé de fabrication du dispositif selon la figure 13.
- La figure 17 représente, schématiquement, une vue de dessus de la figure 16.
- La figure 18 représente, schématiquement et en coupe, un troisième mode de réalisation particulier d'un dispositif de détection et/ou d'émission de rayonnement électromagnétique selon l'invention.
- Les figures 19 et 20 représentent, schématiquement et en coupe, différentes étapes d'un procédé de fabrication de l'invention selon la figure 18.

Comme cela est habituel dans la représentation des circuits notamment intégrés, les diverses figures ne sont pas tracées à l'échelle.

### Description des modes de réalisation particuliers de l'invention

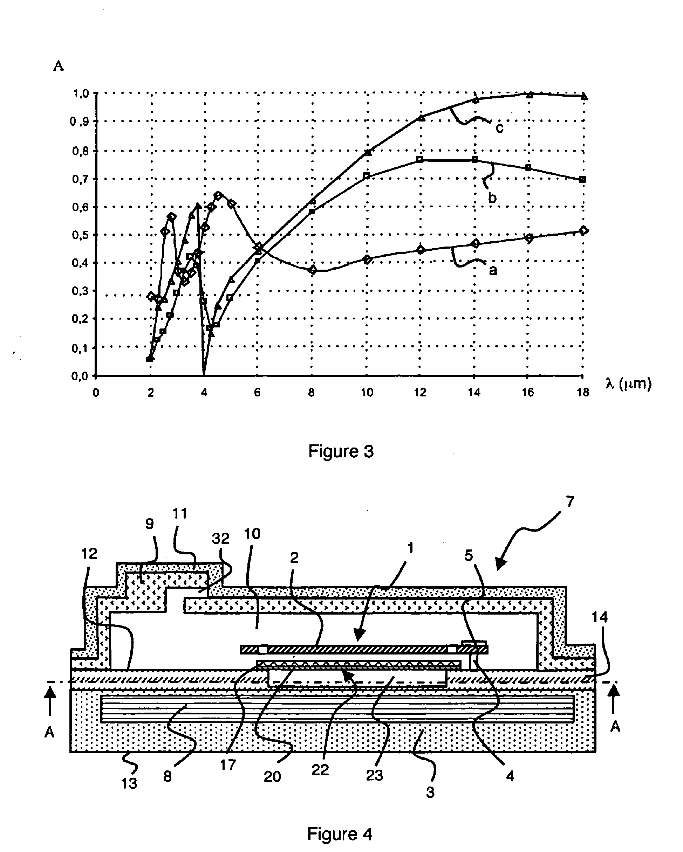

La figure 3 met en évidence les inconvénients de l'utilisation d'un réflecteur faisant simultanément fonction de getter. En effet, la couche mince métallique constituant, simultanément, le getter et le réflecteur capture les espèces gazeuses en particulier l'oxygène, espèce très oxydante. Cette capture entraîne, à l'usage, l'oxydation du getter et provoque une augmentation de la résistivité de la couche métallique et la détérioration de sa capacité à réfléchir le rayonnement incident. Les trois courbes a, b et c, de la figure 3, représentent le rapport de la puissance absorbée sur la puissance incidente A en fonction de la longueur d'onde λ du rayonnement, respectivement, d'un réflecteur résistif c'est-à-dire oxydé, d'un bolomètre comportant un tel réflecteur et d'un bolomètre comportant un réflecteur parfait (non oxydé). Ces courbes a, b et c montrent une dégradation du rapport de la puissance absorbée sur la puissance incidente pour le bolomètre comportant le réflecteur résistif.

Comme illustré à la figure 4, un dispositif de détection et/ou d'émission de rayonnement électromagnétique comporte, de manière connue, un microboîtier 7 d'encapsulation sous vide ou sous pression réduite. Ce dispositif est particulièrement adapté aux détecteurs thermiques IR non refroidis comme les microbolomètres.

Le microboîtier 7 comporte classiquement un capot 9 et un substrat 3 délimitant un logement 10 hermétique. Le logement 10 encapsule au moins un détecteur et/ou émetteur thermique non refroidi 1 ayant une membrane 2 sensible au rayonnement électromagnétique et suspendue au-dessus du substrat 3. Le détecteur et/ou émetteur thermique 1 doit être encapsulé sous vide ou sous pression réduite pour assurer et maintenir ses performances au cours de son utilisation.

Le logement 10 peut encapsuler un ou plusieurs détecteurs et/ou émetteurs thermiques 1, individuellement ou sous forme de matrice, par exemple sous forme d'une matrice de quatre détecteurs 1. Le logement 10 aménage un espace au-dessus de la membrane 2 du détecteur et/ou émetteur thermique 1, éloignant cette dernière du capot 9, d'une distance comprise, avantageusement, entre 0,5 µm et 5µm.

Le capot 9 est en matériau transparent au rayonnement électromagnétique ou comporte une fenêtre transparente au rayonnement électromagnétique, localisée dans un plan parallèle à la membrane 2 et disposée en vis-à-vis de la membrane 2 pour permettre une absorption maximale des rayonnements. À titre d'exemple, pour la détection ou l'émission d'un rayonnement infrarouge, la fenêtre transparente peut être réalisée en silicium (Si), germanium (Ge) ou sulfure de zinc (ZnS).

Le substrat 3 se présente typiquement sous forme d'une plaquette de silicium comportant un circuit de lecture 8 et/ou des moyens de stimuli, une face avant 12 dite "face active" ainsi qu'une face arrière 13 dépourvue de composants électroniques.

La face avant 12 du substrat 3 est, avantageusement, constituée par une couche superficielle de passivation 14 électriquement isolante. La couche superficielle de passivation 14 est typiquement une couche d'oxyde de silicium (SiO) ou de nitrure de silicium (SiN) ou d'oxynitrure de silicium (SiOₓN_{y}).

La face avant 12 du substrat 3 fait office de support sur lequel reposent ou sont ancrés le ou les détecteurs et/ou émetteurs thermiques non refroidis 1.

Pour une application dans le domaine de l'imagerie infrarouge et, notamment, pour des imageurs infrarouge monolithiques fonctionnant à température ambiante, le dispositif peut comprendre une architecture matricielle c'est-à-dire contenir plusieurs détecteurs 1, chaque détecteur pouvant également être sous forme d'une matrice de détecteurs élémentaires. Un circuit de multiplexage en silicium de type CMOS ou CDD est alors également intégré au sein du substrat 3, pour sérialiser les signaux électriques issus des détecteurs 1 et les exploiter par un système d'imagerie usuel.

Pour limiter les pertes thermiques, le détecteur et/ou émetteur 1 est construit selon une microstructure en couches minces, avec des bras d'isolement 5, selon une structure suspendue classique.

La membrane 2 est réalisée sous forme d'une ou plusieurs couches minces d'un matériau sensible à la chaleur, d'épaisseur typiquement comprise entre 01µm et 1µm et d'un absorbeur qui convertit le rayonnement électromagnétique en chaleur et la transmet au matériau sensible.

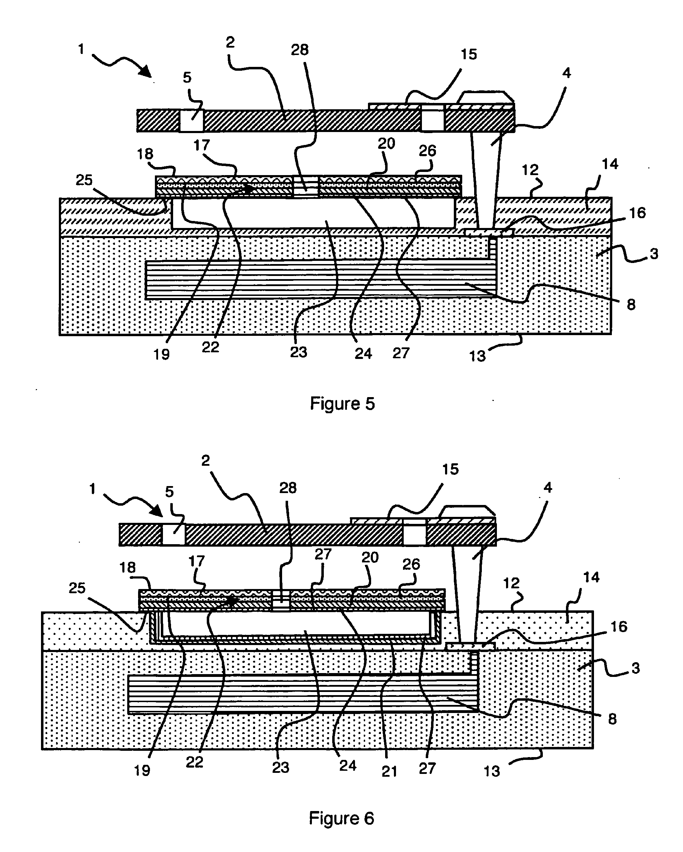

Comme représenté à la figure 5, des électrodes 15 placées sur la membrane 2 selon un agencement classique, sont reliées électriquement au circuit de lecture 8 et/ou aux moyens de stimuli par l'intermédiaire des microponts 4 et de contacts 16 formés sur le substrat 3. Les électrodes 15 et les contacts 16 sont constitués par des matériaux métalliques, par exemple, en titane (Ti), nitrure de titane (TiN), platine (Pt) ou un alliage nickel -chrome (NiCr).

Le dispositif de détection et/ou d'émission comporte, également, un réflecteur 17 sous forme d'une couche mince réfléchissante disposée entre la face avant 12 du substrat 3 et la membrane 2. Cette couche mince est, avantageusement, métallique. Le réflecteur 17 est disposé sous la membrane 2, parallèlement à celle-ci, et permet de réfléchir le rayonnement électromagnétique vers la membrane 2 faisant ainsi office de moyens de réflexion.

Pour un dispositif comportant plusieurs détecteurs et/ou émetteurs 1, les moyens de réflexion sont formés par plusieurs réflecteurs 17 individuels. Chaque réflecteur 17 individuel est, avantageusement, disposé sous la membrane 2 de chaque détecteur et/ou émetteur 1.

Le réflecteur 17 a une première face principale 18 en regard de la membrane 2 et une seconde face principale 19 en regard de la face avant 12 du substrat 3. Un espace vide sépare le réflecteur 17 de la membrane 2 pour libérer la première face principale 18. Ainsi disposée, la première face principale 18 du réflecteur 17 peut réfléchir les rayons incidents vers la membrane 2, pour permettre l'optimisation du rendement optique du détecteur et/ou émetteur thermique 1.

Le réflecteur 17 est constitué par un ou plusieurs matériaux inertes aux gaz résiduels à absorber et présentant un coefficient de réflexion élevé c'est-à-dire supérieur ou égal à 90%. Le réflecteur 17 est, de préférence, bon conducteur des rayons incidents, dense et a une faible porosité. On choisira, de préférence, un réflecteur 17 en métal, plus particulièrement sélectionné parmi l'aluminium, l'or et le cuivre ou un alliage à base de ces métaux.

Au moins un getter 20 est disposé sur au moins une partie de la seconde face principale 19 du réflecteur 17, pour former un ensemble réflecteur/getter 22.

On entend par "disposé sur au moins une partie de la seconde face principale 19" le fait que l'emplacement du getter 20 est localisé au niveau de la seconde face principale 19, sous le réflecteur 17. Ceci implique que le getter 20 est solidaire du réflecteur 17 mais pas obligatoirement en contact direct avec le réflecteur 17. Comme représenté à la figure 5, il peut ainsi être envisagé d'intercaler une ou plusieurs couches minces 26 entre le réflecteur 17 et le getter 20.

Un espace libre 23, libérant une surface accessible 24 (face inférieure) du getter 20 et en communication avec le logement 10, est formé entre l'ensemble réflecteur/getter 22 et la face avant 12 du substrat 3. On entend par surface accessible 24 du getter 20, la face du getter 20 qui n'est pas tournée vers le réflecteur 17. Cette surface accessible 24 doit pouvoir être ou devenir accessible aux gaz résiduels.

Le getter 20 est formé d'une ou de plusieurs couches minces constituées d'au moins un matériau getter réactif aux gaz résiduels à absorber. L'utilisation de plusieurs matériaux getter permet d'optimiser, avantageusement, le pompage des gaz en ciblant l'action du getter 20. Les matériaux getter formant le getter 20 sont donc choisis en fonction de leurs propriétés physiques et, notamment, leur aptitude à absorber un gaz en particulier et à le faire diffuser et migrer au sein du getter 20.

Le getter 20 est, de préférence, en métal choisi parmi le titane, le molybdène, le baryum, le tantale, le zirconium, le fer et le vanadium ou un alliage à base de ces métaux.

Pour obtenir une surface de contact entre le getter 20 et les gaz résiduels à absorber la plus importante possible, le getter 20 est réalisé, de préférence, sous forme d'une couche mince, ayant une géométrie sensiblement identique à celle du réflecteur 17. Il est disposé sous le réflecteur 17, parallèlement à celui-ci.

L'ensemble réflecteur/getter 22 forme une structure suspendue au-dessus du substrat 3 et qui repose, avantageusement, par au moins un point d'appui 25 sur la couche superficielle de passivation 14 formant la face avant 12 du substrat 3. Le getter 20 et le réflecteur 17 sont suspendus et prennent appui sur le même substrat 3 comportant, de préférence, le circuit de lecture 8 et/ou les moyens de stimuli.

Sur la figure 5, l'espace libre 23 constitue une cavité dans la couche superficielle de passivation 14. L'espace libre 23 est ainsi délimité à sa partie supérieure par l'ensemble réflecteur/getter 22 et à sa partie inférieure et latéralement (à droite et à gauche sur la figure 5) par la couche superficielle de passivation 14. L'ensemble réflecteur/getter 22 se situe, avantageusement, dans un plan parallèle à la fois à la membrane 2 et au substrat 3.

L'ensemble réflecteur/getter 22 comporte, avantageusement, une première couche barrière 26 entre le réflecteur 17 et le getter 20. De plus, la surface accessible 24 du getter 20 peut comporter une seconde couche barrière 27 qui est une couche provisoire de protection du getter 20. La seconde couche barrière 27 deviendra perméable pour que les gaz résiduels à absorber puissent accéder au matériau getter 20 ou sera éliminée avant scellement du dispositif.

Les première et seconde couches barrières, respectivement 26 et 27, sont des couches isolantes et/ou des couches barrières de diffusion qui servent à protéger les éléments constitutifs du réflecteur 17 et du getter 20. En particulier, la première couche barrière 26 est destinée à préserver l'intégrité chimique du réflecteur 17 et du getter 20 en empêchant, en particulier, la diffusion d'espèces chimiques du getter 20 vers le réflecteur 17 et toute interdiffusion entre ces derniers pour n'altérer ni l'un ni l'autre. La seconde couche barrière 27 évite toute contamination du getter 20 par les divers gaz polluants intervenant dans le procédé de fabrication du dispositif de détection et/ou d'émission de rayonnement électromagnétique. Les première et seconde couches barrières, respectivement 26 et 27, peuvent être formées d'une ou de plusieurs couches de monoxyde de silicium (SiO), nitrure de silicium (SiN ou Si₃N₄) de nitrure de titane (TiN), chaque couche ayant une épaisseur comprise entre 0,05µm à 2µm.

À titre d'exemple, la couche 26 est en nitrure de silicium et la couche 27 est en matériau métallique tel que le nitrure de titane, de préférence, pouvant interagir avec le matériau du getter.

Le dispositif de détection et/ou d'émission comporte au moins un orifice 28 traversant l'ensemble réflecteur/getter 22. L'orifice 28 débouche dans la cavité 23 sous l'ensemble réflecteur/getter 22 et permet de mettre en communication le logement 10 et la cavité 23. Les gaz résiduels en provenance du logement 10, accèdent à la cavité 23, et par conséquent à la surface accessible 24 du getter 20, par cet orifice 28.

Selon une variante représentée à la figure 6, le dispositif de détection et/ou d'émission de rayonnement électromagnétique peut comporter non seulement un premier getter 20 faisant partie de l'ensemble réflecteur/getter 22, mais également un second getter 21. Celui-ci peut être identique ou différent du premier getter 20 et recouvre le fond de la cavité 23. La surface accessible du second getter 21 (face supérieure sur la figure 6) peut, également, comporter une seconde couche barrière 27. Comme précédemment, la ou les couches barrières 27 sont rendues perméables pour rendre le second getter 21 opérationnel.

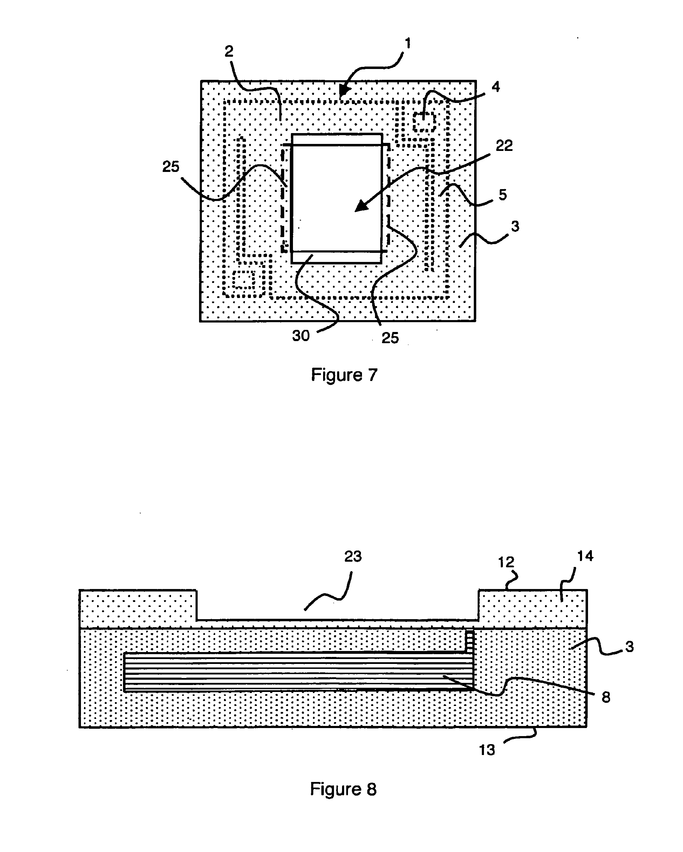

Selon une autre variante représentée à la figure 7, l'ensemble réflecteur/getter 22 est dépourvu d'orifice 28. La cavité 23 est en communication avec le logement 10 grâce à au moins une ouverture latérale 30 de la cavité 23. La cavité 23 étant rectangulaire et, la largeur ou la longueur de l'ensemble réflecteur/getter 22 étant inférieure à, respectivement, la largeur ou la longueur de la cavité 23, cette ouverture latérale 30 correspond à l'espace créé par la cavité 23 non recouverte par l'ensemble réflecteur/getter 22.

Un procédé de fabrication du dispositif de détection et/ou d'émission de rayonnement électromagnétique selon le premier mode de réalisation représenté à la figure 6, comporte la formation de l'espace libre 23 entre l'ensemble réflecteur/getter 22 et la face avant 12 du substrat 3. L'espace libre 23 est réalisé par une étape de gravure (figure 8) de la couche superficielle de passivation 14 constituant la face avant 12 du substrat 3. Cette étape de formation de l'espace libre 23 est intégrée dans un procédé de fabrication de dispositif d'encapsulation classique, bien connu de l'homme de l'art, comportant des techniques usuelles de la microélectronique notamment l'ensemble des techniques de micro-usinage telles que le dépôt et la gravure de couches minces.

Les différentes étapes caractéristiques entrant dans la fabrication du dispositif, selon la figure 6, sont représentées aux figures 8 à 12. Comme représenté à la figure 8, on part d'un substrat 3 formé d'une tranche de silicium, par exemple, de 500µm d'épaisseur et d'une couche mince de SiO d'épaisseur comprise entre 1µm et 2µm constituant la couche superficielle de passivation 14. Le substrat 3 peut intégrer les différents composants d'un circuit intégré 8 et/ou des moyens de stimuli. On grave la couche de passivation formant la face avant 12, sans la traverser selon tout procédé connu, classiquement par gravure chimique ou plasma, pour former une cavité 23 ayant une profondeur comprise, avantageusement, entre 0,1 µm et 1µm.

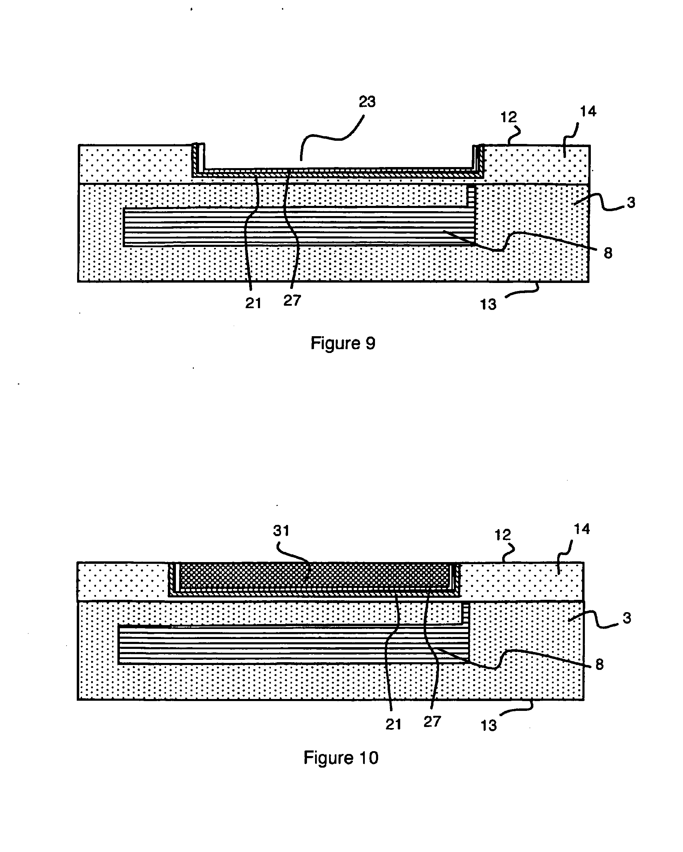

Comme représenté à la figure 9, une couche mince métallique formant le second getter 21 est déposée, par exemple par pulvérisation cathodique, dépôt chimique en phase vapeur ou évaporation sur la couche superficielle de passivation 14. Puis, la couche mince métallique est, éventuellement, gravée sur la face avant 12 du substrat 3 disposée à la périphérie de la cavité 23 (figure 9).

La seconde couche barrière 27 est ensuite réalisée sur le second getter 21 par dépôt chimique en phase vapeur, de préférence LPCVD ou PECVD suivi d'une gravure éventuelle de la couche barrière sur la face avant 12 du substrat 3 à la périphérie de la cavité 23. On obtient, par exemple, une couche mince de SiO, SiN ou Si₃N₄ d'épaisseur comprise entre 0,05 µm et 5 µm sur le second getter 21 (figure 9).

La cavité 23 ainsi formée est ensuite remplie avec un matériau sacrificiel, par exemple du polyimide, puis planarisée par rapport à la surface de la couche superficielle de passivation 14, par exemple par polissage mécano-chimique (figure 10) pour former une couche sacrificielle 31.

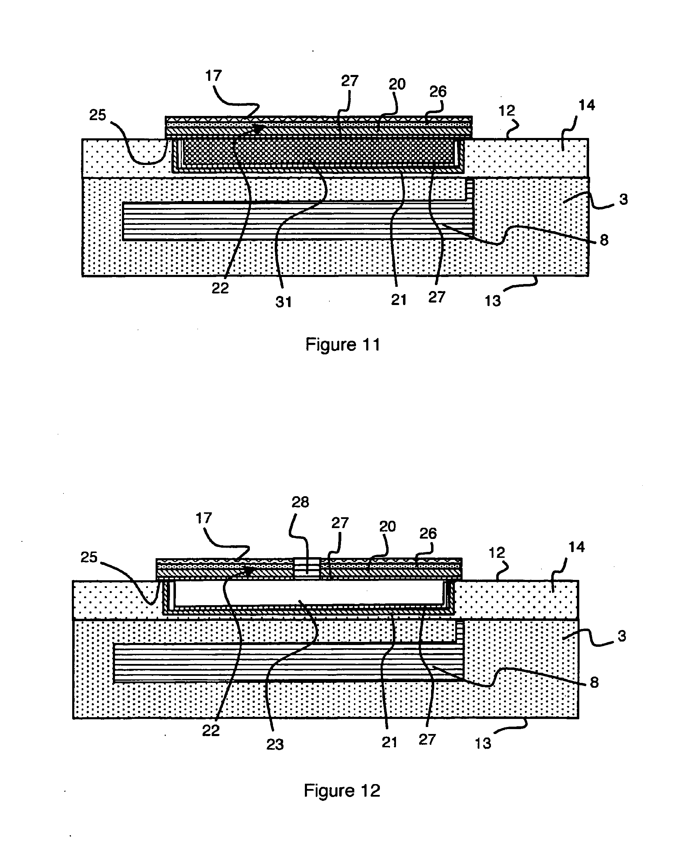

L'étape suivante, représentée à la figure 11, consiste à déposer puis, avantageusement, graver selon tout procédé connu l'ensemble réflecteur/getter 22 sous forme de couches minces recouvrant la cavité 23 et une partie de la couche superficielle de passivation 14 pour constituer des points d'appui 25. À titre d'exemple, cette étape consiste à déposer et graver, successivement, une couche mince de TiN formant la seconde couche barrière 27 du premier getter 20, une couche mince de Ti formant le premier getter 20, une couche mince de SiN formant la première couche barrière 26 puis une couche mince d'aluminium (Al) formant le réflecteur 17.

L'orifice 28 est ensuite formé par gravure de l'ensemble rélfecteur/getter 22 (figure 12). Lors du procédé de fabrication, l'orifice 28 pratiqué dans l'ensemble rélfecteur/getter 22 permet d'éliminer, par gravure, le matériau de la couche sacrificielle 31. De préférence, la totalité du matériau sacrificiel est éliminée de la cavité 23. La seconde couche barrière 27 de l'ensemble réflecteur/getter 22 constitue alors la surface accessible 24 du getter 20 libérée par la cavité 23.

Dans le cas de la variante représentée à la figure 7, il n'est pas nécessaire de réaliser un orifice 28. En effet, l'ensemble réflecteur/getter 22 est constitué d'un empilement de couches minces qui ne recouvre que partiellement la couche sacrificielle 31. Les parties de la couche sacrificielle 31 non recouvertes forment les ouvertures latérales 30 après élimination de la couche sacrificielle 31. Les ouvertures latérales 30 peuvent, par exemple, être aménagées de part et d'autre de l'ensemble réflecteur/getter 22.

Le détecteur et/ou émetteur thermique non refroidi 1 est ensuite réalisé puis encapsulé selon tout procédé connu pour obtenir le dispositif représenté à la figure 4.

À titre d'exemple, le détecteur et/ou émetteur thermique non refroidi 1 est réalisé sur une couche sacrificielle, par exemple en polyimide, d'une épaisseur comprise entre 1µm et 2,5µm correspondant, de préférence, au quart de la longueur d'onde à détecter et/ou à émettre de manière à constituer, entre les électrodes 15 et le réflecteur 17, une distance quart d'onde conduisant au maximum d'absorption.

À titre indicatif, l'encapsulation peut être réalisée, de préférence, par une technique bien connue de microencapsulation sous vide ou sous atmosphère réduite. Cette technique consiste à déposer une couche sacrificielle recouvrant le détecteur et/émetteur thermique non refroidi 1, puis une couche mince constituant le capot 9. Enfin, la couche sacrificielle est gravée grâce à un évent 32 (figure 4) pratiqué dans le capot 9, pour définir le logement 10 et libérer le détecteur et/ou émetteur 1. Le logement 10 est ensuite scellé et rendu hermétique par dépôt sous vide ou sous pression réduite d'une couche de scellement 11. Pratiquement, le scellement est réalisé dans une chambre sous vide (figure 4).

Avant scellement, le ou les getters 20 et 21 sont, avantageusement, activés par traitement thermique. La température d'activation in situ doit être suffisamment élevée pour provoquer la désorption des espèces chimiques présentes dans le matériau getter. L'activation est, de préférence, effectuée par recuit sous vide, à une température comprise entre 350°C et 450°C durant une période variant entre environ 10 à 60 minutes.

De même, avant scellement, la ou les secondes couches barrières 27 sont rendues perméables aux gaz résiduels à absorber par une étape de traitement thermique à une température supérieure à 150°C.

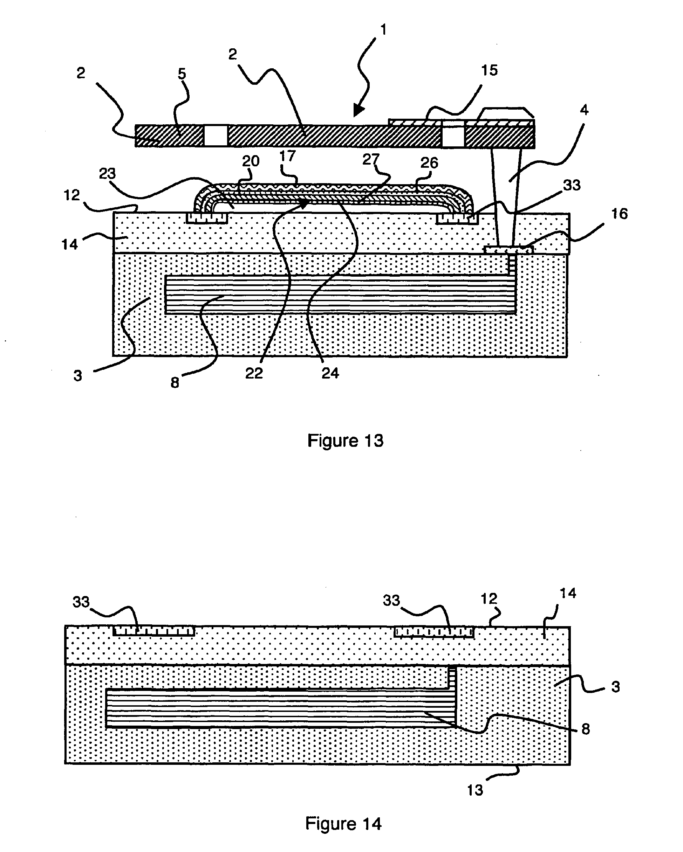

Selon un second mode de réalisation particulier, l'ensemble réflecteur/getter 22 forme une structure suspendue au-dessus du substrat 3. Comme représenté à la figure 13, l'espace libre 23 libérant la surface accessible 24 du getter de l'ensemble réflecteur/getter 22 est formé par un soulèvement local de l'ensemble réflecteur/getter 22. Selon une représentation en coupe, ce dernier apparaît sous forme d'un pont reposant sur au moins deux zones d'ancrage 33.

Avantageusement, le soulèvement de l'ensemble réflecteur/getter 22 permet d'espacer l'ensemble 22 de la couche superficielle de passivation 14 d'une distance comprise, de préférence, entre 50nm et 200nm. L'ensemble 22 se rapproche alors de la membrane 2. La distance entre l'ensemble réflecteur/getter 22 et la membrane 2 est réduite à une distance comprise entre 2µm et 5µm.

Les gaz résiduels à absorber peuvent ainsi atteindre la surface accessible 24 du ou des getters par au moins un passage latéral créé par le soulèvement localisé entre les zones d'ancrage 33.

La zone d'ancrage 33 est destinée à assurer l'accroche de l'ensemble réflecteur/getter 22 à la face avant 12 du substrat 3 et le maintien de ce dernier, à une certaine distance de la membrane 2.

Un procédé de fabrication du dispositif de détection et/ou d'émission de rayonnement électromagnétique selon le second mode de réalisation (figure 13) comporte la formation de l'espace libre 23 entre l'ensemble réflecteur/getter 22 et la face avant 12 du substrat 3 selon les étapes successives décrites ci-après.

Comme représenté à la figure 14, au moins deux zones d'ancrage 33 de l'ensemble réflecteur/getter 22 sont formées sur la face avant 12 du substrat 3. La zone d'ancrage 33 peut être formée par modification d'une zone localisée de la face avant 12 du substrat 3. À titre d'exemple purement indicatif, on peut envisager l'abrasion locale par gravure plasma ou usinage ionique de la couche superficielle de passivation 14.

Selon une variante non représentée, la zone d'ancrage 33 peut être réalisée par une modification géométrique de cette zone. Des motifs ("design") notamment des rainures ou des bossages, peuvent être définis par dépôt et gravure selon tout procédé connu et assurent l'accroche de l'ensemble réflecteur/getter 22.

Alternativement ou de façon complémentaire, Il peut être également envisagé de modifier la nature ou la composition du matériau constituant cette zone localisée, par exemple, par implantation ionique, oxydation ou réduction.

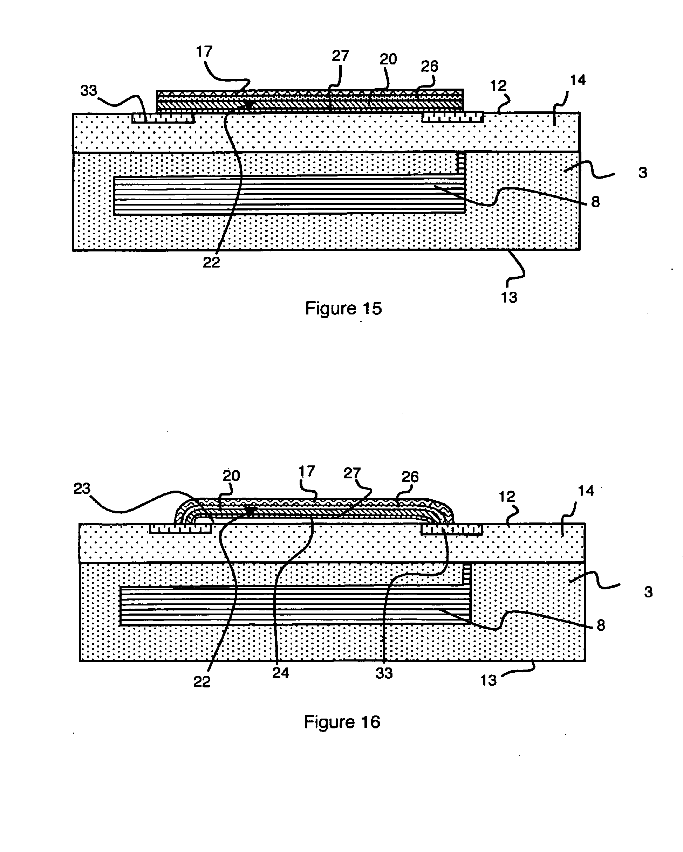

L'ensemble réflecteur/getter 22 est ensuite déposé sur la face avant 12 du substrat 3 sous forme de couches minces recouvrant au moins une partie de chaque zone d'ancrage 33 (figure 15).

Les étapes de réalisation de l'émetteur et/ou émetteur et d'encapsulation du procédé de fabrication sont similaires à celles du premier procédé de fabrication décrit ci-dessus.

Comme représenté à la figure 16, au moins une partie de l'ensemble réflecteur/getter 22 disposée entre les zones d'ancrage 33 est décollée et soulevée localement par un traitement thermique à haute température. La surface active 24 du getter 20 est libérée avant le scellement de façon à protéger le getter tout au long du procédé de fabrication.

Ce traitement thermique est, avantageusement, réalisé par un bref recuit à haute température, de préférence, à température supérieure à 300°C durant un temps t compris entre 1 à 100 secondes. Ce traitement thermique génère des contraintes thermiques qui produisent le décollement de l'ensemble réflecteur/getter 22. En effet, la différence des coefficients de dilatation entre les constituants de l'ensemble réflecteur/getter 22, essentiellement métalliques, et celui de la face avant 12 du substrat 3 provoque des contraintes mécaniques responsables du décollement et du soulèvement. Ce traitement thermique ne doit pas être prolongé pour éviter toute détérioration des composants, sensibles aux températures élevées, du dispositif de détection et/ou d'émission de rayonnement électromagnétique.

Le soulèvement forme alors l'espace libre 23, libérant la surface accessible 24 du getter 20.

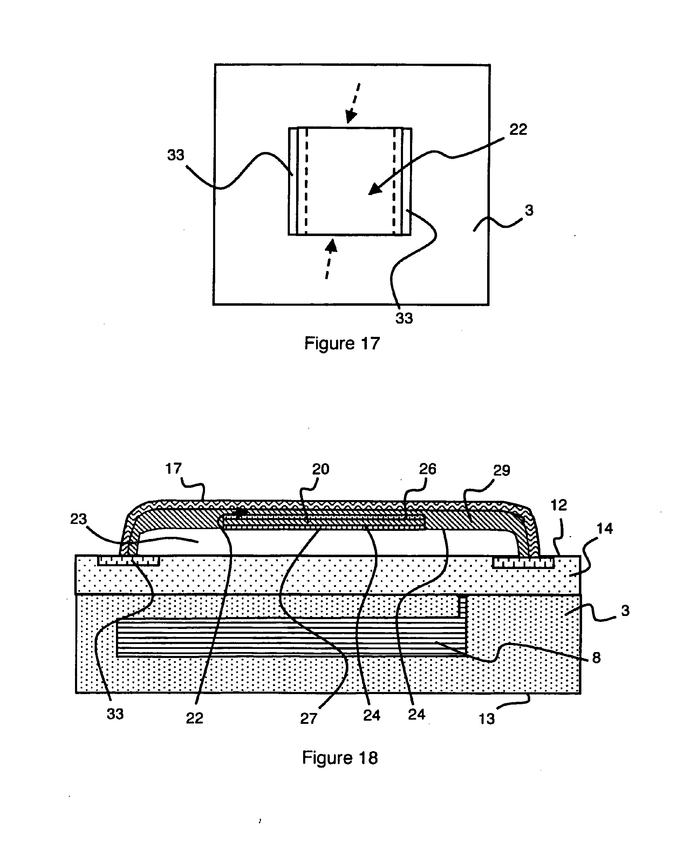

Comme représenté à la figure 17, le soulèvement forme également au moins un passage latéral. L'espace libre 23 communique alors avec le logement 10 par au moins un passage latéral (flèches en pointillées sur la figure 17).

Selon un troisième mode de réalisation représenté à la figure 18, l'ensemble réflecteur/getter 22 est constitué par deux premiers getters 20 et 29 et le réflecteur 17. Les getters 20 et 29 sont agencés de sorte que chacun ait une surface accessible 24 libérée par l'espace libre 23. Ce mode de réalisation permet d'optimiser l'efficacité du pompage en combinant les spécificités des différents matériaux getter. Le getter 20 peut, par exemple, être constitué d'un matériau absorbant sélectivement l'hydrogène et le getter 29 absorbant sélectivement l'oxygène.

Le procédé de fabrication d'un tel dispositif comporte une étape de dépôt de l'ensemble réflecteur/getter 22 suivant les étapes successives décrites ci-après.

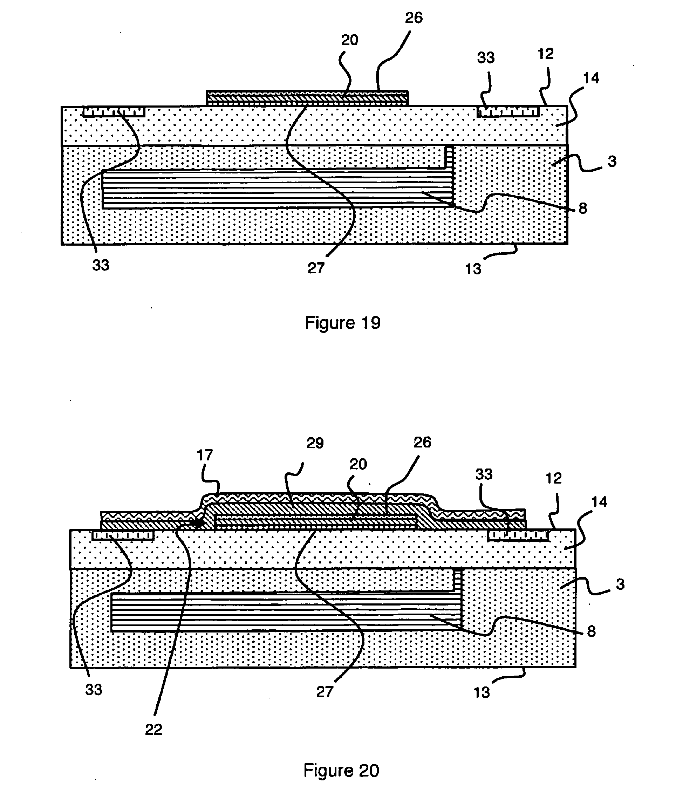

Comme représenté à la figure 19, le getter 20 est déposé et, éventuellement, gravé sur la face avant 12 du substrat 3, entre les zones d'ancrage 33 et à distance de ces zones d'ancrage 33.

Une première couche barrière 26 et une seconde couche barrière 27 sont, avantageusement, déposées et, éventuellement, gravées de façon à se situer, respectivement, sur et sous le getter 20.

Comme représenté à la figure 20, le getter 29 est ensuite déposé de façon à recouvrir le getter 20, au moins une partie de chaque zone d'ancrage 33 et la face avant 12 du substrat 3 située entre le getter 20 et les zones d'ancrage 33. La face inférieure du getter 20 et une partie de la face inférieure du getter 29 sont dans le prolongement l'une de l'autre, en contact avec la face avant 12 du substrat 3. Puis, le réflecteur 17 est finalement déposé pour recouvrir au moins le getter 29.

Selon une variante non représentée, le réflecteur 17 recouvre non seulement le getter 29 mais s'étend aussi sur une partie de la couche superficielle de passivation 14.

Le design de chaque couche constituant l'ensemble réflecteur/getter 22 est défini, éventuellement, par gravure selon tout procédé connu soit après chaque dépôt soit une fois avoir déposé l'ensemble des couches minces constituant l'ensemble réflecteur/getter 22.

Les étapes ultérieures du procédé de fabrication sont identiques à celles du premier mode de fabrication décrit précédemment.

Après soulèvement de l'ensemble réflecteur/getter 22 (figure 18), les faces accessibles des getter 20 et 29 sont libérées. Comme illustré à la figure 18, le getter 20 est, en pratique, inséré dans le getter 29.

L'invention n'est pas limitée aux modes de réalisation décrits ci-dessus à titre d'exemples, non limitatifs. Par exemple, le substrat peut être dépourvu de couche superficielle de passivation 14. L'espace libre 23 est alors réalisé selon des procédés de fabrication identiques à ceux décrits précédemment, directement dans ou sur la plaquette de silicium comportant le circuit de lecture et/ou les moyens de stimuli.

Les procédés de fabrication du dispositif de détection et/ou d'émission de rayonnement électromagnétique selon le second et le troisième mode de réalisation permettent, avantageusement, de protéger le ou les getters 20, 21 ou 29 tout au long du procédé de fabrication et de diminuer ainsi les risques de contamination des getters 20, 21 et 29. En effet, la libération de la face accessible 24 du ou des getters est effectuée, de préférence, en dernier lieu, juste avant le scellement sous vide ou sous pression réduite du dispositif de détection et/ou d'émission de rayonnement électromagnétique. Le ou les getters 20, 21 ou 29 sont, par conséquent, protégés de toute contamination tout au long du procédé de fabrication du dispositif. Avantageusement, l'activation du ou des getters 20, 21 ou 29 avant scellement n'est plus indispensable.

Le dispositif de détection et/ou d'émission de rayonnement électromagnétique selon l'invention permet de réserver des emplacements pour les getters 20, 21 et 29 sans toutefois dégrader le facteur de remplissage optique des détecteurs et/ou émetteurs thermiques 1 et en maintenant les performances optimales du dispositif. La structure du dispositif du détecteur et/ou émetteur thermique 1 permet, notamment, d'intégrer un réflecteur et un getter tout en évitant toute dégradation du coefficient de réflexion du réflecteur 17 au cours du temps.

## Revendications

1. Dispositif de détection et/ou d'émission de rayonnement électromagnétique ayant un microboîtier (7) d'encapsulation sous vide ou sous pression réduite qui comporte un capot (9) et un substrat (3), délimitant un logement (10) hermétique, ledit logement (10) encapsulant :
- au moins un détecteur et/ou émetteur thermique non refroidi (1) ayant une membrane (2) sensible au rayonnement électromagnétique suspendue au-dessus du substrat (3),
- des moyens de réflexion (17) du rayonnement électromagnétique vers la membrane (2), sous forme d'une couche mince disposée entre une face avant (12) du substrat (3) et la membrane (2), lesdits moyens de réflexion (17) ayant une première face principale (18) en regard de la membrane (2) et une seconde face principale (19) en regard de la face avant (12) du substrat (3) et,
- au moins un getter (20),
dispositif **caractérisé en ce que** le getter (20) est disposé sur au moins une partie de la seconde face principale (19) des moyens de réflexion (17) pour former un ensemble réflecteur/getter (22) et **en ce qu'**un espace libre (23), libérant une surface accessible (24) du getter et en communication avec le logement (10), est formé entre l'ensemble réflecteur/getter (22) et la face avant (12) du substrat (3).

2. Dispositif selon la revendication 1, **caractérisé en ce que** l'ensemble réflecteur/getter (22) repose sur la face avant (12) du substrat (3) par au moins un point d'appui (25).

3. Dispositif selon l'une des revendications 1 et 2, **caractérisé en ce que** l'ensemble réflecteur/getter (22) forme une structure suspendue au-dessus du substrat (3).

4. Dispositif selon l'une quelconque des revendications 1 à 3, **caractérisé en ce que** la face avant (12) du substrat (3) est constituée par une couche superficielle de passivation (14) dans laquelle est réalisée l'espace libre (23).

5. Dispositif selon l'une quelconque des revendications 1 à 4, **caractérisé en ce qu'**il comporte au moins un orifice (28) traversant l'ensemble réflecteur/getter (22).

6. Dispositif selon l'une quelconque des revendications 1 à 5, **caractérisé en ce que** l'ensemble réflecteur/getter (22) comporte une première couche barrière (26) entre les moyens de réflexion (17) et le getter (20).

7. Dispositif selon l'une quelconque des revendications 1 à 6, **caractérisé en ce que** le getter (20) est en métal choisi parmi le titane, le molybdène, le baryum, le tantale, le zirconium, le fer et le vanadium ou un alliage à base de ces métaux.

8. Dispositif selon l'une quelconque des revendications 1 à 7, **caractérisé en ce que** les moyens de réflexion (17) sont en métal choisi parmi l'aluminium, l'or et le cuivre ou un alliage à base de ces métaux.

9. Procédé de fabrication d'un dispositif de détection et/ou d'émission de rayonnement électromagnétique selon l'une quelconque des revendications 1 à 8, **caractérisé en ce qu'**il comporte la formation dudit espace libre (23) entre l'ensemble réflecteur/getter (22) et la face avant (12) du substrat (3).

10. Procédé selon la revendication 9, **caractérisé en ce qu'**il comporte les étapes successives suivantes :
- gravure d'une couche superficielle de passivation (14) constituant la face avant (12) du substrat (3) pour former une cavité (23) dans ladite couche (14),
- remplissage de la cavité (23) avec un matériau sacrificiel puis planarisation par rapport à la surface de la couche superficielle de passivation (14),
- dépôt de l'ensemble réflecteur/getter (22) sous forme de couches minces recouvrant ladite cavité (23) et une partie de la couche superficielle de passivation (14) pour constituer des points d'appui (25),
- élimination du matériau sacrificiel.

11. Procédé selon la revendication 9, **caractérisé en ce qu'**il comporte les étapes successives suivantes:
- formation d'au moins deux zones d'ancrage (33) de l'ensemble réflecteur/getter (22) sur la face avant (12) du substrat (3),
- dépôt sur la face avant (12) du substrat (3) de l'ensemble réflecteur/getter (22) sous forme de couches minces recouvrant au moins une partie de chaque zone d'ancrage (33),
- traitement thermique à haute température pour décoller et soulever localement au moins une partie de l'ensemble réflecteur/getter (22) disposée entre les zones d'ancrage (33), ledit traitement thermique étant réalisé à une température supérieure à 300°C durant un temps t compris entre 1 à 100 secondes, ledit soulèvement formant l'espace libre (23) libérant une surface accessible (24) du getter et ledit espace libre (23) communiquant avec le logement (10) par au moins un passage latéral.

12. Procédé selon la revendication 11, **caractérisé en ce que** l'ensemble réflecteur/getter (22) est formé d'au moins un premier getter (20), un second getter (29) et les moyens de réflexion (17) et **en ce que** le dépôt dudit ensemble (22) comporte les étapes successives suivantes :
- dépôt du premier getter (20) sur la face avant (12) du substrat (3), entre les zones d'ancrage (33) et à distance desdites zones (33),
- dépôt du second getter (29) recouvrant le premier getter (20), au moins une partie de chaque zone d'ancrage (33) et la face avant (12) du substrat (3) située entre le premier getter (20) et les zones d'ancrage (33) et,
- dépôt des moyens de réflexion (17) recouvrant au moins le second getter (29).

13. Procédé selon l'une quelconque des revendications 9 à 12, **caractérisé en ce que** l'ensemble réflecteur/getter (22) comporte une seconde couche barrière (27) qui recouvre la surface accessible (24) du getter libérée par l'espace libre (23) et **en ce que** la seconde couche barrière (27) est rendue perméable aux gaz résiduels à absorber par une étape de traitement thermique à une température supérieure à 150°C.

## Claims

1. Device for detection and/or emission of electromagnetic radiation having an encapsulation micropackage (7) in a vacuum or under reduced pressure that comprises a cap (9) and a substrate (3) delineating a tightly sealed housing (10), said housing (10) encapsulating:
- at least one uncooled thermal detector and/or emitter (1) having a membrane (2) sensitive to electromagnetic radiation suspended above the substrate (3),
- reflective means (17) for reflecting the electromagnetic radiation towards the membrane (2), in the form of a thin layer arranged between a front surface (12) of the substrate (3) and the membrane (2), said reflective means (17) having a first main surface (18) facing the membrane (2) and a second main surface (19) facing the front surface (12) of the substrate (3) and,
- at least one getter (20),
device **characterized in that** the getter (20) is arranged on at least a part of the second main surface (19) of the reflective means (17) to form a reflector/ getter assembly (22) and that a free space (23), releasing an accessible surface (24) of the getter and in communication with the housing (10), is formed between the reflector/getter assembly (22) and the front surface (12) of the substrate (3).

2. Device according to claim 1, **characterized in that** the reflector/getter assembly (22) bears on the front surface (12) of the substrate (3) via at least one bearing point (25).

3. Device according to one of claims 1 and 2, **characterized in that** the reflector/getter assembly (22) forms a suspended structure above the substrate (3).

4. Device according to any one of claims 1 to 3, **characterized in that** the front surface (12) of the substrate (3) is formed by a superficial passivation layer (14) in which the free space is made (23).

5. Device according to any one of claims 1 to 4, **characterized in that** it comprises at least one hole (28) passing through the reflector/getter assembly (22).

6. Device according to any one of claims 1 to 5, **characterized in that** the reflector/getter assembly (22) comprises a first barrier layer (26) between the reflective means (17) and the getter (20).

7. Device according to any one of claims 1 to 6, **characterized in that** the getter (20) is made from a metal chosen from titanium, molybdenum, barium, tantalum, zirconium, iron and vanadium or an alloy based on these metals.

8. Device according to any one of claims 1 to 7, **characterized in that** the reflective means (17) is metallic made from a metal chosen from aluminium, gold and copper or an alloy based on these metals.

9. Method for fabricating a device for detection and/or emission of electromagnetic radiation according to any one of claims 1 to 8, **characterized in that** it comprises formation of said free space (23) between the reflector/ getter assembly (22) and the front surface (12) of the substrate (3).

10. Method according to claim 9, **characterized in that** it comprises the following successive steps:
- etching of a superficial passivation layer (14) constituting the front surface (12) of the substrate (3) to form a cavity (23) in said layer (14),
- filling of the cavity (23) with a sacrificial material followed by planarization with respect to the surface of the superficial passivation layer (14),
- deposition of the reflector/getter assembly (22) in the form of thin layers covering said cavity (23) and a part of the superficial passivation layer (14) to constitute bearing points (25),
- elimination of the sacrificial material.

11. Method according to claim 9, **characterized in that** it comprises the following successive steps:
- formation of at least two anchoring areas (33) of the reflector/getter assembly (22) on the front surface (12) of the substrate (3),
- deposition of the reflector/getter assembly (22) on the front surface (12) of the substrate (3) in the form of thin layers covering at least a part of each anchoring area (33),
- heat treatment at high temperature to locally lift-off and raise at least a part of the reflector/getter assembly (22) located between the anchoring areas (33), said heat treatment being performed at a temperature of more than 300°C for a time t comprised between 1 and 100 seconds, said lift-off forming the free space (23) releasing an accessible surface (24) of the getter and said free space (23) communicating with the housing (10) via at least one lateral passage.

12. Method according to claim 11, **characterized in that** the reflector/getter assembly (22) is formed by at least a first getter (20), a second getter (29) and the reflective means (17), and that deposition of said assembly (22) comprises the following successive steps:
- deposition of the first getter (20) on the front surface (12) of the substrate (3), between the anchoring areas (33) and at a distance from said anchoring areas (33),
- deposition of the second getter (29) covering the first getter (20), at least a part of each anchoring area (33) and the front surface (12) of the substrate (3) situated between the first getter (20) and the anchoring areas (33) and,
- deposition of the reflective means (17) covering at least the second getter (29).

13. Method according to any one of claims 9 to 12, **characterized in that** the reflector/getter assembly (22) comprises a second barrier layer (27) that covers the accessible surface (24) of the getter released by the free space (23) and that the second barrier layer (27) is made permeable to the residual gases to be absorbed by a heat treatment step at a temperature of more than 150°C.

## Patentansprüche

1. Vorrichtung zum Erfassen und/oder Aussenden elektromagnetischer Strahlung, mit einem Mikrogehäuse (7) zur Einkapselung unter Vakuum oder unter vermindertem Druck, das eine Kappe (9) und ein Substrat (3) umfasst, die eine hermetische Aufnahme (10) umgrenzen, wobei die Aufnahme (10) folgendes einkapselt:
- wenigstens einen ungekühlten Thermodetektor und/oder -sender (1), der eine für elektromagnetische Strahlung empfindliche Membran (2) aufweist, die oberhalb des Substrats (3) aufgehängt ist,
- Mittel zum Reflektieren (17) der elektromagnetischen Strahlung in Richtung der Membran (2), in Form einer dünnen Schicht, die zwischen einer Vorderseite (12) des Substrats (3) und der Membran (2) angeordnet ist, wobei die Reflexionsmittel (17) eine erste Hauptseite (18) gegenüber der Membran (2) und eine zweite Hauptseite (19) gegenüber der Vorderseite (12) des Substrats (3) aufweisen, sowie
- wenigstens ein Getter (20),
Vorrichtung, die **dadurch gekennzeichnet ist, dass** das Getter (20) auf wenigstens einem Teil der zweiten Hauptseite (19) der Reflexionsmittel (17) angeordnet ist, um eine Reflektor/Getter-Anordnung (22) zu bilden, und dass ein Freiraum (23), der eine zugängliche Fläche (24) des Getters freilegt und mit der Aufnahme (10) verbunden ist, zwischen der Reflektor/Getter-Anordnung (22) und der Vorderseite (12) des Substrats (3) ausgebildet ist.

2. Vorrichtung nach Anspruch 1, **dadurch gekennzeichnet, dass** die Reflektor/Getter-Anordnung (22) über wenigstens einen Auflagepunkt (25) auf der Vorderseite (12) des Substrats (3) aufliegt.

3. Vorrichtung nach einem der Ansprüche 1 und 2, **dadurch gekennzeichnet, dass** die Reflektor/Getter-Anordnung (22) eine oberhalb des Substrats (3) aufgehängte Struktur bildet.

4. Vorrichtung nach einem der Ansprüche 1 bis 3, **dadurch gekennzeichnet, dass** die Vorderseite (12) des Substrats (3) von einer oberflächlichen Passivierungsschicht (14) gebildet ist, in welcher der Freiraum (23) ausgebildet ist.

5. Vorrichtung nach einem der Ansprüche 1 bis 4, **dadurch gekennzeichnet, dass** sie wenigstens eine die Reflektor/Getter-Anordnung (22) durchquerende Öffnung (28) umfasst.

6. Vorrichtung nach einem der Ansprüche 1 bis 5, **dadurch gekennzeichnet, dass** die Reflektor/Getter-Anordnung (22) eine erste Barriereschicht (26) zwischen den Reflexionsmitteln (17) und dem Getter (20) umfasst.

7. Vorrichtung nach einem der Ansprüche 1 bis 6, **dadurch gekennzeichnet, dass** das Getter (20) aus Metall besteht, welches aus Titan, Molybdän, Barium, Tantal, Zirkonium, Eisen und Vanadium oder einer Legierung auf Basis dieser Metalle ausgewählt ist.

8. Vorrichtung nach einem der Ansprüche 1 bis 7, **dadurch gekennzeichnet, dass** die Reflexionsmittel (17) aus Metall bestehen, welches aus Aluminium, Gold und Kupfer oder einer Legierung auf Basis dieser Metalle, ausgewählt ist.

9. Verfahren zur Herstellung einer Vorrichtung zum Erfassen und/oder Aussenden elektromagnetischer Strahlung nach einem der Ansprüche 1 bis 8, **dadurch gekennzeichnet, dass** es die Bildung des Freiraumes (23) zwischen der Reflektor/Getter-Anordnung (22) und der Vorderseite (12) des Substrats (3) umfasst.

10. Verfahren nach Anspruch 9, **dadurch gekennzeichnet, dass** es die folgenden aufeinander folgenden Schritte umfasst:
- Ätzen einer oberflächlichen Passivierungsschicht (14), welche die Vorderseite (12) des Substrats (3) bildet, um einen Hohlraum (23) in der Schicht (14) auszubilden,
- Auffüllen des Hohlraums (23) mit einem Opfermaterial, anschließend Planarisieren in Bezug auf die Oberfläche der oberflächlichen Passivierungsschicht (14),
- Abscheiden der Reflektor/Getter-Anordnung (22) in Form von dünnen Schichten, die den Hohlraum (23) sowie einen Teil der oberflächlichen Passivierungsschicht (14) bedecken, um Auflagepunkte (25) zu bilden,
- Entfernen des Opfermaterials.

11. Verfahren nach Anspruch 9, **dadurch gekennzeichnet, dass** es die folgenden aufeinander folgenden Schritte umfasst:
- Ausbilden von wenigstens zwei Verankerungsbereichen (33) der Reflektor/Getter-Anordnung (22) auf der Vorderseite (12) des Substrats (3),
- Abscheiden der Reflektor/Getter-Anordnung (22) in Form von dünnen Schichten, die wenigstens einen Teil jedes Verankerungsbereichs (33) bedecken, auf der Vorderseite (12) des Substrats (3),
- Wärmebehandlung bei hoher Temperatur, um wenigstens einen Teil der Reflektor/Getter-Anordnung (22), der zwischen den Verankerungsbereichen (33) angeordnet ist, lokal abzulösen und anzuheben, wobei die Wärmebehandlung bei einer Temperatur von über 300 °C über eine Zeit t zwischen 1 und 100 Sekunden durchgeführt wird, wobei die Abhebung den Freiraum (23) bildet, der eine zugängliche Fläche (24) des Getters freilegt, und wobei der Freiraum (23) über wenigstens einen seitlichen Durchgang mit der Aufnahme (10) in Verbindung steht.

12. Verfahren nach Anspruch 11, **dadurch gekennzeichnet, dass** die Reflektor/Getter-Anordnung (22) von wenigstens einem ersten Getter (20), einem zweiten Getter (29) und den Reflexionsmitteln (17) gebildet ist und dass das Abscheiden der Anordnung (22) die folgenden aufeinander folgenden Schritte umfasst:
- Abscheiden des ersten Getters (20) auf der Vorderseite (12) des Substrats (3) zwischen den Verankerungsbereichen (33) und im Abstand von den Bereichen (33),
- Abscheiden des zweiten Getters (29), welches das erste Getter (20), wenigstens einen Teil eines jeden Verankerungsbereichs (33) und die zwischen dem ersten Getter (20) und den Verankerungsbereichen (33) gelegene Vorderseite (12) des Substrats (3) bedeckt, und
- Abscheiden der Reflexionsmittel (17), die wenigstens das zweite Getter (29) bedecken.

13. Verfahren nach einem der Ansprüche 9 bis 12, **dadurch gekennzeichnet, dass** die Reflektor/Getter-Anordnung (22) eine zweite Barriereschicht (27) umfasst, die die durch den Freiraum (23) freigelegte zugängliche Fläche (24) des Getters bedeckt, und dass die zweite Barriereschicht (27) für die durch einen Wärmebehandlungsschritt bei einer Temperatur von über 150 °C zu absorbierenden restlichen Gase durchlässig gemacht ist.
